# FASCICULE DE BREVET EUROPEEN

(11) **EP 2 495 832 B1**
(45) Date de publication et mention de la délivrance du brevet: **04.03.2015**
(21) Numéro de dépôt: 12354010.6
(22) Date de dépôt: 30.01.2012
(51) Int. Cl.: H02B 1/20, H02G 5/02, H02B 1/21

(54) **Conducteur de courant**
Stromleiter
Current conductor

(30) Priorité: 01.03.2011 FR 1100617
(43) Date de publication de la demande: 05.09.2012
(73) Titulaire: Schneider Electric Industries SAS, 92500 Rueil-Malmaison (FR)
(72) Inventeur: Van Dooren, Didier, 38050 Grenoble Cedex 09 (FR); Reppelin, Jean-Marc, 38050 Grenoble Cedex 09 (FR); Gerbier, Philippe, 38050 Grenoble Cedex 09 (FR); Lepretre, Pascal, 38050 Grenoble Cedex 09 (FR)
(74) Mandataire: Péru, Laurence

(56) Documents cités:
- EP-A1- 0 681 355
- WO-A1-00/27007
- GB-A- 1 484 192
- US-A- 2 057 266
- US-A- 3 509 514

## Description

### DOMAINE TECHNIQUE

La présente invention concerne un conducteur de courant de type barre, un jeu de différents conducteurs de courant et un agencement de conducteurs de courant. Elle porte aussi sur une armoire pour une installation d'alimentation et/ou de distribution électrique comprenant au moins un tel conducteur de courant.

### ETAT DE LA TECHNIQUE

Lorsque le courant est important, la solution la plus répandue pour la conduite du courant consiste à utiliser des barres plates de cuivre, dont la section est déterminée en fonction du courant nominal ; ces barres peuvent être très lourdes et difficiles à manipuler. Une optimisation consiste à évider le centre de la barre ou de la juxtaposition de barres, pour former une barre de type tubulaire, ou un profilé en cuivre plié.

Par ailleurs, des supports sont adaptés aux sections des barres pour les maintenir en place dans le fond des armoires. Le document EP0681355 ainsi décrit un dispositif permettant de recevoir plusieurs conducteurs de courant sous forme de barres ou profilés allongés, permettant leur positionnement précis dans une direction verticale. Ce dispositif est adapté à différentes sections de conducteurs, représentant une gamme de calibres adaptés pour la conduite de courant en basse tension, jusque 1600 A. Cette solution présente l'avantage de faciliter les connexions électriques avec des dispositifs amont ou aval.

En particulier pour les calibres élevés, il apparaît que la quantité de cuivre nécessaire à ces configurations est importante, générant un poids conséquent des conducteurs de courant, et surtout un prix important. Il a certes été envisagé de remplacer le cuivre par de l'aluminium ; cependant, les limites électrotechniques de cette solution ne permettent pas l'obtenir des gammes aussi larges de jeux de barres et nécessitent de modifier les supports de maintien dans les armoires.

### EXPOSE DE L'INVENTION

Ainsi, l'invention a pour objet de proposer une solution améliorée de conduite du courant, qui ne présente pas tout ou partie des inconvénients de l'état de la technique. Plus précisément, l'invention a pour objet de proposer une solution optimisée de conduite du courant, permettant un montage et une connexion électrique rapide, adaptée pour des courants à fort ampérage et/ou triphasés. L'utilisation de ce type de profil permet, à section équivalente, une réduction des pertes par effet Joule.

A cet effet, l'invention concerne un conducteur électrique longitudinal de section inscrite dans un rectangle, ledit conducteur ayant une enveloppe parallépipédique rectangle ; le conducteur est de préférence en aluminium, notamment anodisé, et formé d'une seule pièce. Le conducteur comprend des évidements internes à son enveloppe qui s'étendent sur la longueur du conducteur, et dont l'enveloppe permet de définir une surface courbée s'étendant sur la longueur de conducteur ; l'intersection, orthogonalement à la longueur, avec toute section du conducteur forme une ligne courbe qui relie deux coins adjacents du rectangle formant enveloppe de ladite section. Ainsi le conducteur comprend une première partie principale et une deuxième partie complémentaire, qui inclut les évidements et représente moins de 50 % de la matière conductrice du conducteur de courant, telles que l'enveloppe de la section de la première partie est formée par trois côtés du rectangle et la ligne courbe et l'enveloppe de la section de la deuxième partie est formée par le quatrième côté, de préférence un grand côté, du rectangle et ladite ligne. Les évidements ne sont donc pas répartis de façon symétrique au sein du conducteur.

Pour renforcer mécaniquement le conducteur, il est préféré que la deuxième partie soit fermée, entre les deux coins adjacents, par une bande sensiblement rectiligne qui peut être reliée depuis sa zone centrale à la partie principale du conducteur par des renforts. La surface externe du conducteur formée par la bande peut comprendre des ailettes pour son refroidissement et une surface plane servant d'appui pour le fraisage mécanique de la face opposée du conducteur.

Avantageusement, la surface séparant la première et la deuxième partie est concave ; de plus, il est préféré que le conducteur soit continu, c'est-à-dire que la section du conducteur soit constante, avec les lignes courbes d'intersection superposable quelle que soit la section de conducteur considérée.

De préférence, quelle que soit la section considérée, les deux faces opposées qui comprennent chacune un des coins adjacents du rectangle sont pourvues de dents aptes à un maintien dans un support isolant d'une armoire électrique. Pour favoriser son refroidissement, le conducteur peut comprendre des ailettes sur sa surface externe.

Le conducteur électrique selon l'invention comprend, dans sa partie principale, des pistes de contact autour d'une rainure de liaison. Lorsque le conducteur est en aluminium, les pistes de contact peuvent être recouvertes de cuivre, auquel cas il est préféré que le conducteur comprenne des rainures disposées autour des pistes de contact pour permettre le positionnement de masques lors d'une opération de dépose de cuivre sur les pistes de contact.

L'invention concerne également un jeu de conducteurs comprenant au moins plusieurs conducteurs de section différente qui présentent tous une rainure de liaison identique.

Sous un autre aspect, l'invention concerne un agencement d'au moins deux conducteurs reliés mécaniquement et électriquement par au moins un dispositif de liaison qui comprend des lumières aptes à coopérer avec la rainure des conducteurs pour des moyens de solidarisation de type vis ou goujon. Le dispositif de liaison comprenant lesdits moyens de solidarisation peut comprendre des pions de positionnement.

Enfin, l'invention est relative à une armoire électrique comprenant une pluralité de conducteurs, avantageusement disposés en parallèle et de façon décalée en gradins, et un support isolant de maintien d'au moins un desdits conducteurs.

### BREVE DESCRIPTION DES DESSINS

Ces objets, caractéristiques et avantages de la présente invention seront exposés en détail dans la description suivante d'un mode de réalisation particulier fait à titre non-limitatif en relation avec les figures jointes parmi lesquelles :
La figure 1 représente la section d'un conducteur de courant selon un mode de réalisation de l'invention.
La figure 2A représente la répartition du courant au sein de la section d'un conducteur de courant de section rectangulaire ; la figure 2B représente la section du conducteur de courant selon le mode de réalisation de l'invention dans laquelle une partie principale est mise en évidence.
Les figures 3A et 3B montrent la section de conducteurs de courant d'un jeu de conducteurs selon un mode de réalisation de l'invention, respectivement pour faible ampérage et très fort ampérage.
La figure 4A représente la liaison entre deux conducteurs de courant alignés selon un mode de réalisation de l'invention ; la figure 4B montre l'éclisse pour cette liaison.
La figure 5A représente la liaison entre deux conducteurs de courant perpendiculaires selon un mode de réalisation de l'invention ; la figure 5B montre les moyens adaptés.
Les figures 6A et 6B illustrent un mode de solidarisation alternatif des dispositifs de liaison.

### DESCRIPTION DETAILLEE D'UN MODE DE REALISATION PREFERE

Sur les différentes figures, les mêmes références sont utilisées pour des éléments similaires pour une raison de simplicité et de clarté.

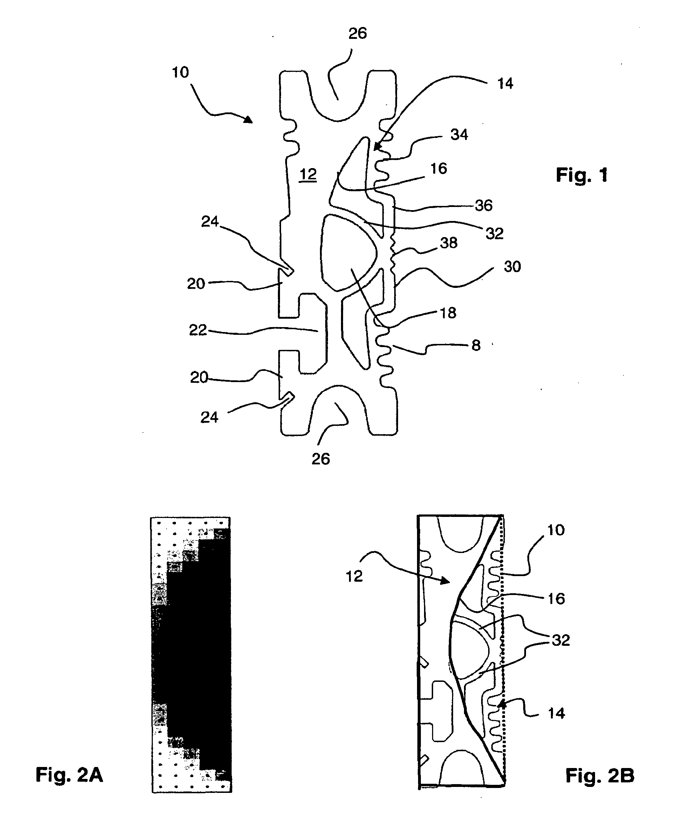

Les supports de jeux de barres commercialisés, et même les armoires électriques, ne sont pas adaptés pour le remplacement direct de jeux de barres en cuivre existants par des barres, par exemple en aluminium, qui nécessiterait des sections de conducteurs très augmentées. Le profil de conducteur selon l'invention, illustré notamment dans la figure 1, permet de répondre à ce besoin.

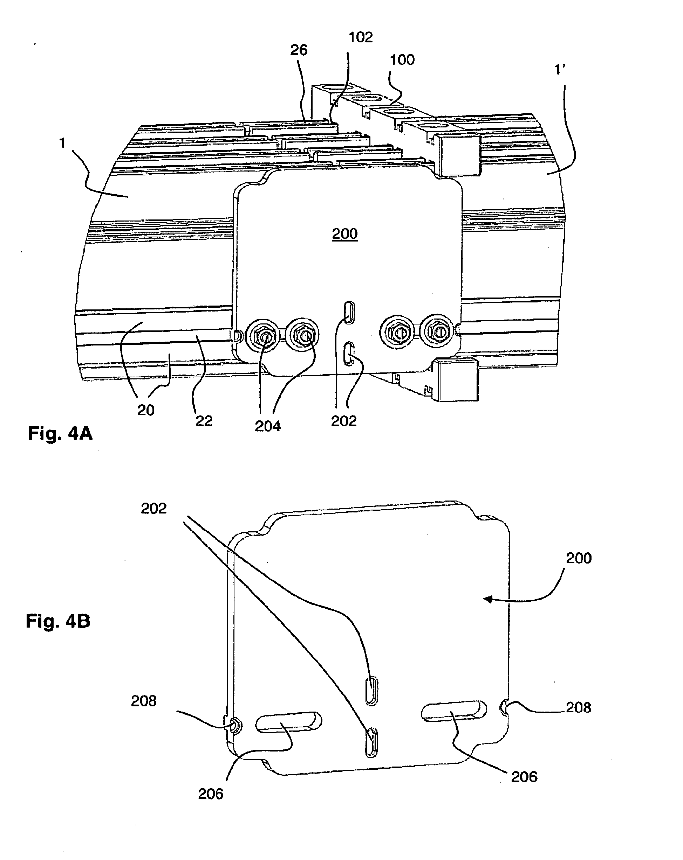

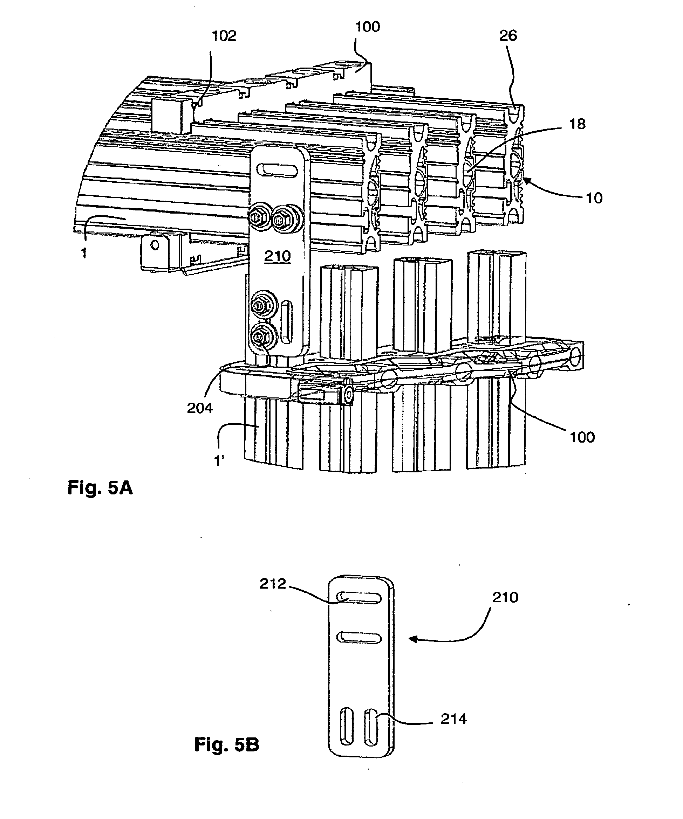

Le conducteur de courant 1 selon l'invention se présente sous la forme d'une barre, dont l'enveloppe parallélépipédique rectangle s'étend sur une longueur d'amenée très supérieure à sa section (voir figures 4A, 5A). Orthogonalement à sa longueur, le conducteur de courant 1 présente une section 10 dans laquelle on peut identifier (voir figure 2B) une partie principale 12 qui remplit la fonction principale de conduite du courant, complémentaire d'une deuxième partie 14 adjacente. Cette première partie principale 12 conductrice présente une coupe orthogonale délimitée par trois des côtés du rectangle d'enveloppe de la section 10 du conducteur 1 et par une ligne courbe 16 ; la ligne courbe 16, ou plus généralement la surface courbée générée par cette ligne 16 sur la longueur de conducteur 1, est définie par un ensemble d'évidements 18 longitudinaux, traversant l'enveloppe du conducteur 1 sur sa longueur. Avantageusement, les deux arêtes du parallélépipède coupant la surface de séparation entre première et deuxième partie 12, 14 définissent une grande face dudit parallélépipède.

Ainsi, le conducteur 1 selon l'invention comprend une surface concave qui tronque le rectangle dans lequel est inscrite la section réelle 10 du conducteur 1. Elle s'étend entre deux coins adjacents de cette section rectangulaire 10, forme une courbe vers l'intérieur de sorte à présenter une épaisseur minimale en son centre, de l'ordre d'un tiers de la largeur de la section rectangulaire 10. La surface de séparation présente de préférence une forme sensiblement régulière et symétrique entre ses deux extrémités, la ligne courbe 16 formant un arc de cercle ou une portion d'ellipse ; avantageusement, quelle que soit sa position le long du conducteur 1, la section 10 est identique et superposable.

De fait, les inventeurs ont constaté que le courant se déplaçant dans un conducteur 1 de forme rectangulaire n'utilise pas toute la section 10. Deux phénomènes sont en cause : l'effet de peau qui se traduit par un courant plus important en périphérie de la section 10 et l'interaction de proximité due aux effets tridimensionnels du courant triphasé circulant entre trois (ou quatre) barres 1 adjacentes, qui se traduit par la polarisation du courant d'un côté du conducteur 1. La figure 2A illustre le résultat de ces phénomènes en montrant la répartition du courant dans la section d'un conducteur rectangulaire, cette densité de courant étant d'autant plus forte que la couleur est claire : il apparaît que le courant se répartit principalement sur la partie gauche de cette section rectangulaire. L'invention utilise cette caractéristique pour une conception de barre 1 dans laquelle la répartition de forme et de densité de matériau conducteur est semblable à la répartition du courant : voir figure 2B.

La section 10 du conducteur 1 comprend de plus au moins deux pistes de contact 20 (voire quatre, en fonction du calibre), qui servent de surface de contact autour d'une rainure de liaison 22, disposées sur la surface plane de la partie principale 12 du conducteur 1, opposée à sa surface courbée 16. Cette rainure de liaison 22 présente une section en forme de T, qui sert au logement d'une vis, ou autre moyen de solidarisation, lors d'une liaison électrique, comme cela sera détaillé par la suite. Deux petites rainures 24 inclinées à environ 45° et de largeur de 2 mm sont réparties de part et d'autre des pistes de contact 20. Elles ont pour fonction de permettre l'insertion de masques sous forme de tôles mécaniques, qui sont utilisés lors d'une éventuelle opération de dépose de cuivre sur les pistes de contact 20 pour protéger le reste du profil, tout en jouant le rôle de chicanes arrêtant les particules de cuivre.

La section 10 du conducteur 1 comprend de plus des dents 26, de largeur comprise entre 5 et 10 mm, réalisées en creux au niveau des deux surfaces opposées parallèles de la première partie 12, correspondant à la largeur de la section 10 et comprenant chacune un des coins adjacents. Ces dents 26 ont pour fonction de faciliter la fixation et le maintien du conducteur 1 dans une armoire électrique : elles sont prévues pour coopérer avec des créneaux correspondants d'un support isolant 100 destiné à recevoir le conducteur 1. La forme et la taille des dents 26 correspondent de préférence aux dimensions des supports isolants 100 traditionnellement utilisés au sein de l'armoire électrique pour pouvoir monter les conducteurs électriques 1 selon l'invention en lieu et place des conducteurs cuivre actuels.

La deuxième partie 14 de la section du conducteur 1 peut de préférence, et notamment pour les calibres élevés, comprendre une fine bande 30 sensiblement rectiligne, qui ferme le rectangle dans lequel s'inscrit la section 10 du conducteur 1 : elle représente ainsi une surface opposée à la surface de la partie principale 12 portant la rainure 22. La bande 30 est reliée dans sa partie centrale à la ligne courbe 16 de cette partie principale 12 par des renforts 32 sous forme de fines bandes courbées de faible épaisseur. Entre ces éléments 30, 32, la section de la deuxième partie 14 du conducteur 1 est majoritairement ouverte, échancrée, de sorte à comporter peu de matière ; elle correspond de fait aux évidements 18 traversant longitudinalement le conducteur 1. Ce type de profil creux et fermé propose un moment d'inertie optimum pour ces contraintes ; les éléments refermant la deuxième partie 14 apportent également la rigidité nécessaire à la tenue des contraintes mécaniques lors d'un court circuit.

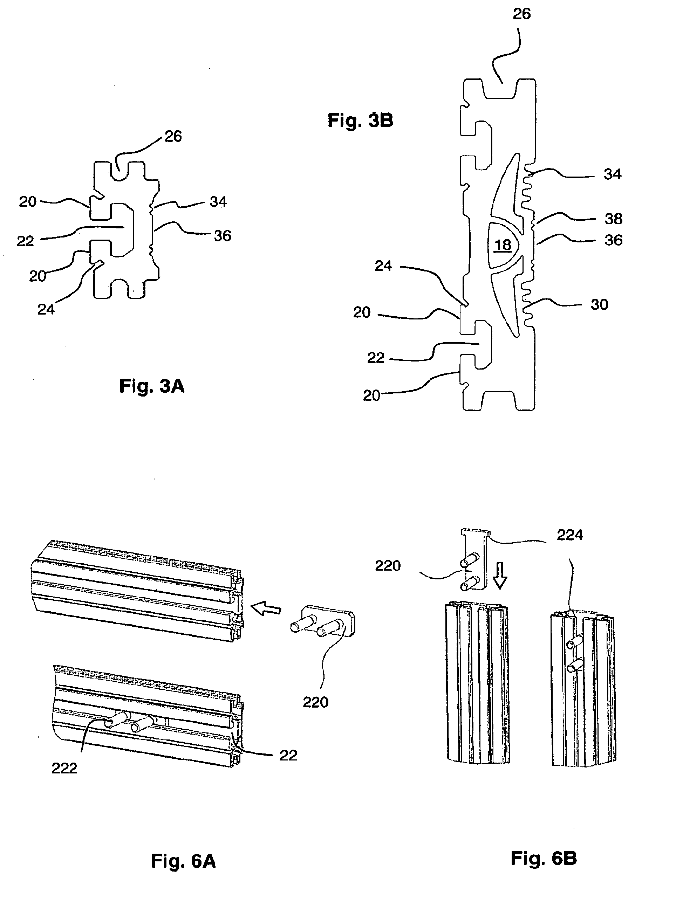

La surface externe formée par la fine bande 30 du conducteur 1 comprend des ailettes 34, qui ont pour fonction d'augmenter la surface d'échange thermique du conducteur 1 et d'améliorer son refroidissement ; alternativement (figure 3A), les ailettes peuvent être localisées directement sur la ligne courbe 16 ; des ailettes peuvent également être mises en place sur la surface opposée à la bande 30, sur la première partie 12. Avantageusement, une surface plane 36 externe, dans une zone centrale de la bande étroite 30 du conducteur 1, sert d'appui pour permettre la pose et le calage du conducteur 1 lors d'opérations mécaniques comme un fraisage, un usinage, de la face plane opposée de la partie principale 12, dont des exemples seront décrits par la suite ; les renforts 32 remplissent une fonction complémentaire de résistance mécanique de l'ensemble du conducteur lors de ces opérations mécaniques.

Enfin, la section 10 du conducteur comprend des petites rainures 38 qui servent d'identification visuelle. De fait, il est avantageux que, quel que soit le calibre du conducteur 1, la surface extérieure des conducteurs soit identique pour une hauteur donnée (la taille des évidements 18 étant alors différente). Les rainures 38 permettent alors aisément de reconnaître le calibre de conducteur 1 sans autres moyen de tri : pour cela, chaque type de conducteurs comprend un nombre différent de rainures. En complément, le conducteur 1 peut comprendre un marquage, répété plusieurs fois sur la longueur du conducteur 1 selon un pas choisi pour rester visible même sur la plus petite longueur du conducteur 1 découpé, notamment sur la surface de la première partie ; ce marquage permet d'indiquer le calibre du profil et/ou toute autre indication utile.

Selon le mode de réalisation de l'invention, la section 10 du conducteur 1 peut être incluse dans un rectangle de hauteur comprise entre 60 mm et 200 mm et largeur de 20 à 30 mm pour permettre la conduite d'un courant de 630 à 4000 A. Un tel conducteur 1, grâce au profil défini selon l'invention, est suffisamment performant pour être tout ou partie en aluminium, ce qui présente l'avantage d'un poids léger, favorable à sa manipulation, à l'ergonomie de montage, et d'un coût réduit. En variante, le conducteur peut comprendre une partie de cuivre, voire être entièrement en cuivre.

Dans le cas du choix de l'aluminium, un traitement de surface par anodisation, par exemple d'épaisseur de 15 µm, est avantageusement effectuée afin d'obtenir une couche de protection contre la corrosion et de favoriser l'émissivité thermique. De plus, les pistes de contact 20 sont recouvertes d'une couche de cuivre de faible épaisseur, par exemple comprise entre 40 et 120 µm, déposée par projection thermique après suppression par fraisage de leur éventuelle anodisation. C'est pour la réalisation de ces opérations que les petites rainures 24 et la surface plane 36 sont utilisées, comme mentionné précédemment.

Naturellement, l'invention ne se limite pas à la forme représentée et le conducteur peut présenter d'autres sections que celles décrites précédemment, avec toutefois une partie conductrice principale 12, réunissant la majeure partie, de 50 à 80 %, de la matière conductrice de la section 10 du conducteur 1, et présentant au moins une surface courbée, avantageusement concave. Notamment, la forme et la taille des évidements 18, le nombre et la présence des ailettes 34, renforts 32,... peuvent varier : voir figures 3.

L'invention porte ainsi également sur un jeu de conducteurs afin de couvrir des distributions de courant sur une large fourchette de courant, de 630 à 4000 A. Pour les valeurs extrêmes de ces courants, le jeu de conducteurs peut comprendre des éléments qui n'ont pas la forme décrite en relation avec le mode de réalisation de l'invention, ledit mode de réalisation étant utilisé sous certaines dimensions couvrant une partie de la gamme. Ainsi, le jeu de conducteurs peut comprendre un conducteur de section simplifiée, comme représenté sur la figure 3A, pour les plus faibles courants, et un conducteur de grande taille et grande section, comme représenté sur la figure 3B, pour les plus forts courants. Toutefois, tous les conducteurs 1 du jeu comprennent une rainure de liaison 22 et des pistes de contact 20 de mêmes dimensions, pour permettre une liaison standardisée. D'autre part, selon une réalisation avantageuse, ils comprennent tous les petites rainures 24, les ailettes 34 sur la face opposée, et les dents de liaison 26 pour leur montage dans une armoire électrique.

Le conducteur décrit précédemment est ainsi adapté pour une utilisation dans une armoire électrique pour une distribution de courant, telle que celle décrite dans le document EP 0681355 présenté précédemment. Une telle armoire peut ainsi comprendre plusieurs conducteurs, se présentant sous la forme d'une barre allongée, positionnés dans une direction horizontale ou verticale. En remarque, dans la direction horizontale, le conducteur peut être utilisé selon deux sens différents, consistant à positionner la rainure de liaison 22 vers le haut ou vers le bas.

Dans leur positionnement dans une armoire électrique, les dents 26 du conducteur 1 coopèrent avec des créneaux isolants 102 d'un support isolant adapté 100, prévu pour accueillir différents formats de conducteurs 1, à l'aide de l'ajout éventuel de cales. Cette armoire comprend alors plusieurs conducteurs 1 disposés en arallèle, dans une direction horizontale ou verticale, de manière avantageusement décalée pour former une structure en gradins. Avantageusement, le conducteur 1 selon le mode de réalisation de l'invention reste compatible avec un montage dans une armoire standard pouvant aussi recevoir des barres plates en cuivre de largeur 5 ou 10 mm.

D'autre part, le conducteur selon le mode de réalisation peut être facilement relié à un autre conducteur. Les figures 4A et 4B illustrent à cet effet la liaison de deux conducteurs 1, 1' alignés, par l'intermédiaire d'un dispositif de liaison mécanique et électrique 200, ici une éclisse dimensionnée pour répondre aux contraintes diélectriques, mécaniques et thermiques imposées aux conducteurs 1 dans une armoire électrique.

Deux conducteurs 1, 1' horizontaux et alignés, tels que décrits ci-dessus, sont reliés entre eux bout à bout par des éclisses 200, qui présentent une dimension adaptée pour un conducteur 1 donné ; pour un jeu de conducteurs, un jeu d'éclisses correspondantes sera aussi prévu. Pour favoriser le positionnement précis d'une éclisse 200 et obtenir un contact électrique optimal, chaque éclisse 200 comprend des pions de positionnement 202, dans leur partie centrale, qui permettent une répartition équivalente des surfaces de contact de l'éclisse 200 avec chaque conducteur 1, 1', plus précisément avec leurs pistes de contact 20. D'autre part, la fixation d'une éclisse 200 sur chaque conducteur 1, 1' est obtenue par deux fois deux vis 204 dont la tête est positionnée de manière imperdable au sein de la rainure 22 d'un conducteur 1, et permet son déplacement en translation jusqu'au bon positionnement final. Chaque vis 204 traverse une lumière 206 de l'éclisse 200 de sorte qu'un écrou peut coopérer avec la partie de tige filetée dépassant à l'extérieur pour procéder à la fixation de l'éclisse 200 sur le conducteur 1. Ces vis 204 assurent ainsi une fixation mécanique et en même temps une liaison électrique entre un conducteur 1 et une éclisse 200. Chaque éclisse 200 comprend de plus des pions de positionnement 208 sur ses extrémités, qui apportent une assistance au montage en facilitant le positionnement superposé de la lumière 206 et de la rainure de liaison 22.

De manière similaire, les figures 5A et 5B représentent une liaison de deux conducteurs 1, 1' disposés dans une direction perpendiculaire. Ce raccordement est réalisé à l'aide d'un autre dispositif de liaison 210 comprenant d'une part au moins une lumière horizontale 212 pour la fixation du conducteur horizontal 1 et d'autre part au moins une lumière verticale 214 pour la fixation du conducteur vertical 1'. Chaque conducteur 1, 1' est relié à la liaison 210 par deux vis 204 comme explicité précédemment.

En remarque, le dispositif de liaison 210 représentée sur la figure 5B comprend deux lumières horizontales 212 car la rainure de liaison 22 du conducteur 1 pourrait se trouver en haut ou en bas ; dans l'exemple représenté, elle se trouve en bas et la lumière horizontale 212 inférieure est utilisée pour la liaison. De même, elle comprend deux lumières verticales 214 pour s'adapter aux deux orientations possibles du conducteur vertical 1'.

En remarque, les figures 4A et 5A illustrent une partie d'une armoire électrique, montrant plusieurs conducteurs 1 parallèles, reliés avec plusieurs conducteurs 1' par des éclisses 200, 210 telles que décrites ci-dessus, dont une seule est visible sur les figures. D'autre part, les surfaces supérieures et inférieures de tous ces conducteurs 1, 1' sont maintenues par des supports isolants 100 comprenant des dents 102 de forme correspondant aux dents 26 des conducteurs, comme mentionné précédemment.

Les deux dispositifs de raccordement 200, 210 explicités précédemment sont de préférence en cuivre et présentent une surface de contact suffisante avec les conducteurs 1, 1' pour assurer le passage du courant.

Dans une alternative, et notamment pour les calibres plus élevés, de type 1600, 2500, 3200, et 4000 A, les connections entre les barres 1 (verticales ou horizontales) et les dispositifs de liaison 200, 210 (pièces en cuivre) sont réalisées à l'aide d'une plaquette en acier 220 sur laquelle sont fixés 2 goujons 222 de longueur appropriée. Ces plaquettes 220 sont glissées dans les rainures 22 des profils 1 ; dans les conducteurs horizontaux, la plaquette 220 peut coulisser dans toute la longueur du profil, mais pour les conducteurs verticaux, il est avantageux que la plaquette 220 se glisse en bout de profil et se cale à l'aide des butées 224 afin de se maintenir en haut du profil vertical, là où se fait la connexion de la liaison.

Les goujons 222 dépassent du profil 1 et passent à travers les pièces de liaison 200, 210 : le serrage se fait au moyen d'un écrou, vissé sur le goujon 222. De ce fait, la plaque 220, faisant office de tête de vis, offre une meilleure prise dans la rainure 22. Sa surface de contact est bien supérieure à une tête de vis type « marteau », avec une très grande rigidité lors de la mise sous efforts électrodynamiques, et la performance électromécanique de la liaison en est accrue ; de plus, le travail du monteur est facilité par le fait que les goujons 222 sortent de la rainure 22, en face avant et font office de préhenseur en aidant l'ajustement de la position de la plaquette 220 avant l'assemblage.

La conception du conducteur 1 selon l'invention permet ainsi une solution optimisée de conduite du courant, permettant un montage et une connexion électrique rapides, adaptée pour des courants à fort ampérage et/ou triphasés. L'utilisation de ce type de profil permet, à section équivalente, une réduction des pertes par effet Joule; cette caractéristique permet par exemple d'utiliser de l'aluminium à la place du cuivre tout en conservant une section d'enveloppe similaire. Cette invention permet de concevoir un système de répartition à partir de ces conducteurs. Le système comprend alors des conducteurs horizontaux et verticaux et des pièces de raccordement. La performance revendiquée tient à la combinaison de ces différents éléments formant ainsi le système.

## Revendications

1. Conducteur électrique (1) inscrit dans une enveloppe parallépipédique rectangle comprenant des évidements (18) internes à l'enveloppe du conducteur (1) qui s'étendent sur la longueur du conducteur (1), **caractérisé en ce que** l'enveloppe des évidements (18) permet de définir une surface courbée s'étendant sur la longueur de conducteur (1) et dont l'intersection orthogonalement à la longueur avec toute section (10) du conducteur (1) forme une ligne courbe (16) qui relie deux coins adjacents du rectangle formant enveloppe de ladite section (10), de sorte que le conducteur (1) comprend une première partie principale (12) et une deuxième partie complémentaire (14), la partie principale (12) du conducteur (1) comprenant de 50 à 80 % de la matière conductrice de la section (10) du conducteur (1) l'enveloppe de la section de la première partie (12) étant formée par trois côtés du rectangle et la ligne courbe (16), et l'enveloppe de la section de la deuxième partie (14) étant formée par le quatrième côté du rectangle et ladite ligne (16), les évidements (18) étant localisés dans la deuxième partie (14).

2. Conducteur électrique selon la revendication 1 dans lequel la surface séparant la première et la deuxième partie (12, 14) est concave et les lignes courbes (16) d'intersection de ladite surface avec toutes les sections (10) orthogonales de conducteur sont superposables.

3. Conducteur électrique selon la revendication 1 ou 2, dans lequel la partie principale (12) du conducteur (1) comprend au moins 60 % de la matière conductrice du conducteur.

4. Conducteur électrique selon l'une des revendications précédentes dans lequel la première et la deuxième partie (12, 14) sont unitaires, formées en aluminium.

5. Conducteur électrique selon l'une des revendications précédentes, dans lequel, quelle que soit la section (10), les deux faces opposées comprenant chacune un des coins adjacents du rectangle sont pourvues de dents réalisées en creux (26) aptes à un maintien dans un support isolant (100) d'une armoire électrique.

6. Conducteur électrique selon l'une des revendications précédentes comprenant des ailettes (34) sur sa surface externe pour favoriser son refroidissement.

7. Conducteur électrique selon l'une des revendications précédentes dans lequel chaque section de la deuxième partie (14) comprend une bande (30) sensiblement rectiligne fermant le côté défini par les deux coins adjacents et reliée depuis sa zone centrale à la partie principale (12) par des renforts (32).

8. Conducteur électrique selon la revendication 7 dans lequel la bande (30) comprend des ailettes (34) pour son refroidissement et une surface plane (36) servant d'appui pour le fraisage mécanique de la face opposée du conducteur (1).

9. Conducteur électrique selon l'une des revendications précédentes, dans lequel la partie principale (12) comprend des pistes de contact (20) autour d'une rainure de liaison (22).

10. Conducteur électrique selon la revendication 9 dans lequel le conducteur (1) est en aluminium, de préférence anodisé, et les pistes de contact (20) sont recouvertes de cuivre, le conducteur (1) comprenant des rainures (24) disposées autour des pistes de contact (20) pour permettre le positionnement de masques lors d'une opération de dépose de cuivre sur les pistes de contact (20).

11. Jeu de conducteurs comprenant au moins un premier conducteur (1) selon l'une des revendications 9 ou 10 et au moins un conducteur de section différente, tous les conducteurs du jeu de conducteurs présentant une rainure de liaison (22) identique.

12. Agencement d'au moins deux conducteurs électriques (1, 1') selon l'une des revendications 9 ou 10, **caractérisé en ce que** deux conducteurs (1, 1') sont reliés mécaniquement et électriquement par au moins un dispositif de liaison (200, 210) comprenant des lumières (206, 212, 214) pour la solidarisation par des moyens (204, 222) traversant lesdites lumières et une rainure (22) d'un des conducteurs (1,1').

13. Agencement de conducteurs électriques (1, 1') selon la revendication 12, dans lequel le dispositif de liaison (200) comprend des pions de positionnement (202, 208).

14. Armoire électrique comprenant une pluralité de conducteurs selon l'une des revendications 1 à 10 ou un agencement de conducteurs selon l'une des revendications 12 à 13, et un support isolant (100) de maintien d'au moins un desdits conducteurs (1).

15. Armoire électrique selon la revendication 14 dans lequel des conducteurs (1) sont disposés en parallèle, de manière décalée pour former une structure en gradins.

## Patentansprüche

1. Elektrischer Leiter (1) mit einer Mantellinie in Form eines Rechteckquaders und im Inneren der Mantellinie des Leiters (1) angeordneten, über die Länge des Leiters (1) verlaufenden Ausnehmungen (18), **dadurch gekennzeichnet, dass** sich durch die Mantellinie der Ausnehmungen (18) eine gekrümmte Fläche in Längsrichtung des Leiters (1) definieren lässt, deren senkrecht zur Längsrichtung vorhandene Schnittpunkte mit allen Querschnittsflächen (10) des Leiters (1) eine gekrümmte Linie (16) ergeben, welche Linie zwei benachbarte Eckpunkte des die Mantellinie bildenden Rechtecks der genannten Querschnittsfläche (10) miteinander verbindet, derart, dass der Leiter (1) einen ersten Hauptabschnitt (12) und einen zweiten Nebenabschnitt (14) umfasst, wobei der Hauptabschnitt (12) des Leiters (1) zwischen 50 und 80 % des Leiterwerkstoffs der Querschnittsfläche (10) des Leiters (1) enthält, die Mantellinie der Querschnittsfläche des ersten Abschnitt (12) durch drei Seiten des Rechtecks und die gekrümmte Linie (16) gebildet wird, die Mantellinie der Querschnittsfläche des zweiten Abschnitts (14) durch die vierte Seite des Rechtecks und die genannte Linie (16) gebildet wird und die Ausnehmungen (18) im zweiten Abschnitt (14) angeordnet sind.

2. Elektrischer Leiter nach Anspruch 1, **dadurch gekennzeichnet, dass** die Trennfläche zwischen dem ersten und dem zweiten Abschnitt (12, 14) konkav geformt ist und die gekrümmten Schnittlinien (16) der genannten Trennfläche mit allen senkrecht dazu liegenden Querschnittsflächen (10) des Leiters aufeinander gelegt werden können.

3. Elektrischer Leiter nach Anspruch 1 oder 2, bei dem der Hauptabschnitt (12) des Leiters (1) mindestens 60 % des Leiterwerkstoffs des Leiters enthält.

4. Elektrischer Leiter nach einem der vorhergehenden Ansprüche, bei dem der erste und der zweite Abschnitt (12, 14) einstückig ausgebildet sind und aus Aluminium bestehen.

5. Elektrischer Leiter nach einem der vorhergehenden Ansprüche, bei dem in jeder Querschnittsfläche (10) in den beiden einander gegenüberliegenden Seiten, welche jeweils einen der beiden benachbarten Eckpunkte des Rechtecks umfassen, als Hohlform ausgebildete Zähne (26) ausgebildet sind, die zur Halterung auf einem Isolierstoffstützer (100) eines Schaltschranks dienen.

6. Elektrischer Leiter nach einem der vorhergehenden Ansprüche mit an der Außenseite ausgebildeten Kühlrippen (34).

7. Elektrischer Leiter nach einem der vorhergehenden Ansprüche, bei dem jede Querschnittsfläche des zweiten Abschnitts (14) einen annähernd geradlinigen Streifen (30) umfasst, der die durch die beiden benachbarten Eckpunkte definierte Seite abschließt und in seinem Mittelbereich über Verstärkungsstege (32) mit dem Hauptabschnitt (12) verbunden ist.

8. Elektrischer Leiter nach Anspruch 7, bei dem im Streifen (30) Kühlrippen (34) sowie eine ebene Fläche (36) ausgebildet sind, die als Auflagefläche zur Fräsbearbeitung der gegenüberliegenden Seite des Leiters (1) dient.

9. Elektrischer Leiter nach einem der vorhergehenden Ansprüche, bei dem der Hauptabschnitt (12) Kontaktbahnen (20) umfasst, die auf beiden Seiten einer Verbindungsnut (22) angeordnet sind.

10. Elektrischer Leiter nach Anspruch 9, bei dem der Leiter (1) aus, vorzugsweise eloxiertem Aluminium besteht und die Kontaktbahnen (20) mit Kupfer überzogen sind, wobei auf beiden Seiten der Kontaktbahnen (20) angeordnete Nuten (24) im Leiter (1) ausgebildet sind, die zur Befestigung von Masken bei der Herstellung des Kupferüberzugs auf den Kontaktbahnen (20) dienen.

11. Leiteranordnung mit mindestens einem ersten Leiter (1) nach einem der Ansprüche 9 oder 10 sowie mindestens einem Leiter mit anderem Querschnitt, wobei alle Leiter der Leiteranordnung eine identische Verbindungsnut (22) umfassen.

12. Verbindungsanordnung mindestens zweier elektrischer Leiter (1, 1') nach einem der Ansprüche 9 oder 10, **dadurch gekennzeichnet, dass** zwei Leiter (1, 1') mechanisch und elektrisch über mindestens eine Verbindungsvorrichtung (200, 210) miteinander verbunden sind, wobei Öffnungen (206, 212, 214) in der Vorrichtung ausgebildet sind, die zur Verbindung mithilfe von durch die Öffnungen hindurchgeführten und in eine Nut (22) eines der Leiter (1, 1') eingesetzten Mitteln (204, 222) dienen.

13. Verbindungsanordnung von elektrischen Leitern (1, 1') nach Anspruch 12, bei der die Verbindungsvorrichtung (200) Positionierstifte (202, 208) umfasst.

14. Schaltschrank mit mehreren Leitern nach einem der Ansprüche 1 bis 10 oder einer Verbindungsanordnung von Leitern nach einem der Ansprüche 12 und 13 und mit einem Isolierstoffträger (100) zur Halterung mindestens eines der genannten Leiter (1).

15. Schaltschrank nach Anspruch 14, bei dem die Leiter (1) zur Bildung einer stufenförmigen Anordnung parallel und versetzt zueinander angeordnet sind.

## Claims

1. Electrical conductor (1) inscribed in a rectangular parallelepipedal enclosure comprising voids (18) internal to the enclosure of the conductor (1) which extend over the length of the conductor (1), **characterized in that** the enclosure of the voids (18) makes it possible to define a curved surface extending over the length of the conductor (1) and whose intersection, orthogonally to the length, with any section (10) of the conductor (1) forms a curved line (16) which links two adjacent corners of the enclosure-forming rectangle of said section (10), such that the conductor (1) comprises a main first part (12) and a complementary second part (14), the main part (12) of the conductor (1) comprising from 50 to 80% of the conductive material of the section (10) of the conductor (1), the enclosure of the section of the first part (12) being formed by three sides of the rectangle and the curved line (16), and the enclosure of the section of the second part (14) being formed by the fourth side of the rectangle and said line (16), the voids (18) being located in the second part (14).

2. Electrical conductor according to Claim 1 ,in which the surface separating the first and the second part (12, 14) is concave and the curved lines (16) of intersection of said surface with all the orthogonal sections (10) of the conductor can be superposed.

3. Electrical conductor according to Claim 1 or 2, in which the main part (12) of the conductor (1) comprises at least 60% of the conductive material of the conductor.

4. Electrical conductor according to one of the preceding claims, in which the first and the second part (12, 14) are unitary, formed from aluminium.

5. Electrical conductor according to one of the preceding claims, in which, whatever the section (10), the two opposite faces each comprising one of the adjacent corners of the rectangle are provided with teeth produced in hollows (26) suitable for securing in an insulating support (100) of an electrical cabinet.

6. Electrical conductor according to one of the preceding claims, comprising fins (34) on its outer surface to favour its cooling.

7. Electrical conductor according to one of the preceding claims, in which each section of the second part (14) comprises a substantially rectilinear strip (30) enclosing the side defined by the two adjacent corners and linked from its central area to the main part (12) by braces (32).

8. Electrical conductor according to Claim 7, in which the strip (30) comprises fins (34) for its cooling and a planar surface (36) serving as a support for the mechanical milling of the opposite face of the conductor (1).

9. Electrical conductor according to one of the preceding claims, in which the main part (12) comprises contact tracks (20) around a link groove (22).

10. Electrical conductor according to Claim 9, in which the conductor (1) is made of aluminium, preferably anodised, and the contact tracks (20) are copper-coated, the conductor (1) comprising grooves (24) arranged around the contact tracks (20) to allow the positioning of masks during a copper deposition operation on the contact tracks (20).

11. Set of conductors comprising at least one first conductor (1) according to one of Claims 9 or 10 and at least one conductor of different section, all the conductors of the set of conductors having an identical link groove (22).

12. Arrangement of at least two electrical conductors (1, 1') according to one of Claims 9 or 10, **characterized in that** two conductors (1, 1') are linked mechanically and electrically by at least one link device (200, 210) comprising openings (206, 212, 214) for the securing, by means (204, 222) passing through said openings and a groove (22) of one of the conductors (1, 1').

13. Arrangement of electrical conductors (1, 1') according to Claim 12, in which the link device (200) comprises positioning pins (202, 208).

14. Electrical cabinet comprising a plurality of conductors according to one Claims 1 to 10 or an arrangement of conductors according to one of Claims 12 to 13, and an insulating support (100) for securing at least one of said conductors (1).

15. Electrical cabinet according to Claim 14, in which conductors (1) are arranged in parallel, staggered to form a stepped structure.
